# EUROPEAN PATENT SPECIFICATION

(11) **EP 2 825 052 B1**
(45) Date of publication and mention of the grant of the patent: **22.08.2018**
(21) Application number: 12711962.6
(22) Date of filing: 12.03.2012
(51) Int. Cl.: A21D 6/00, A21D 8/06, A21D 13/31

(54) **DOUGH-BASED VASE-SHAPED SNACK HEATABLE BY MICROWAVE**
TEIGBASIERTER, IN DER MIKROWELLE ERWÄRMBARER IMBISS IN VASENFORM
COLLATION À BASE DE PÂTE EN FORME DE VASE POUVANT ÊTRE CHAUFFÉE PAR MICRO-ONDES

(43) Date of publication of application: 21.01.2015
(73) Proprietor: Coneinn Marketing, B.V., 1097 JB Amsterdam (NL)
(72) Inventor: CHOUIKHI, Sidi, Finedon Northants NN9 5HT (GB)
(74) Representative: Juncosa Miró, Jaime
(86) International application number: PCT/IB2012/000462
(87) International publication number: WO 2013/136101

(56) References cited:
- EP-A1- 0 661 005
- EP-A2- 1 844 657
- WO-A1-96/37109
- WO-A1-2007/138620
- FR-A1- 2 516 353
- US-A- 4 313 964
- US-A- 4 463 021
- US-A1- 2004 241 300
- US-A1- 2006 216 387
- US-A1- 2012 009 299

## Description

### Technical field

The present invention relates to a frozen dough-based vase-shaped snack heatable by microwave as set forth in the claims which improves the quality of microwave re-heating and serving of frozen dough-based cones or cylinders containing savoury or sweet fillings, and more in particular to the layout of the filling within the dough-based vase-shaped to effect the increase and redistribution of the coupled microwave energy into the filling and cause it to heat more faster and more uniformly.

### Background art

Dough-based vase-shaped snacks are known which are often commercialized in a frozen state and which are intended to be heated by microwave in a microwave oven. Said dough-based vase-shaped snacks generally comprise a cone- or cylinder-shaped outer layer made of dough having a closed lower portion and a rim upper portion around an open top, and a savoury or sweet filling located within said outer layer and having a top surface exposed at said open top of the outer layer.

Such kinds of product are well known in the art as disclosed among other documents in the followings: US 4313964, US 4463021, EP1844657, US 2006216387, WO2007138620 and US 2009/0095853.

The microwave re-heating of the dough-based cone- or cylinder-shaped products containing savoury or sweet fillings presents particular challenges. These include the uneven heating of the product, the rapid overheating, drying and occasional burning of parts of the dough-based cone and the excessive heating of the filling around the top rim while the core parts of the filling remain cooler and even frozen and require extended heating times to bring them to the desired end temperatures.

The vase-shaped shaped snacks are optionally packed in cone- or pyramid-shaped susceptors which tend to focus on effecting the crisping of the dough. Moreover, they tend to use board or paper as a substrate, consequently they have only marginal effects on the heating of toppings and/or fillings in the product and the susceptor's plain face or faces tends to be hot to the touch immediately after heating.

Document CA 2523332 A1 discloses a microwave platform for generating marks on microwavable food products. In an embodiment, the microwave platform comprises a microwave susceptor and a corrugated tubular member having flutes for containing insulated air. The tubular member is attached to the microwave susceptor to form the microwave platform, and the microwave platform defines a plurality of slits so that the microwave platform is capable of causing grill marks to be formed on a food product when the food product is microwaved.

US20040241300 discloses an edible food product in the nature of food filling (in particular a pizza filling) and an edible cone having an open upper end and a downwardly extending wall terminating in a closed lower end, with the cone forming a cavity having an edible baffle divider for receiving the filling on opposite sides of the baffle.

### Disclosure of the invention

The variability in the quality of re-heating of microwaveable meal solutions is often a key obstacle in the way of the wider take up and commercial success of these types of products.

The present invention contributes to improving the quality of the re-heating of a frozen dough-based vase-shaped snack, wherein the improved heating of the filling is achieved through the configuration of the filling inside the cone- or cylinder-shaped dough-based outer layer into a shape which causes an increase in the coupled microwave energy and the redistribution of the energy in the filling.

It is well established that the coupling and distribution of the microwave energy by food products is dependent on the formulation and state (frozen or non-frozen states) of the component elements which make up the product (e.g. baked dough and sauce and particulates in a filling). The formulation and the state of the component elements of the product impact on the dielectric properties of each of the components.

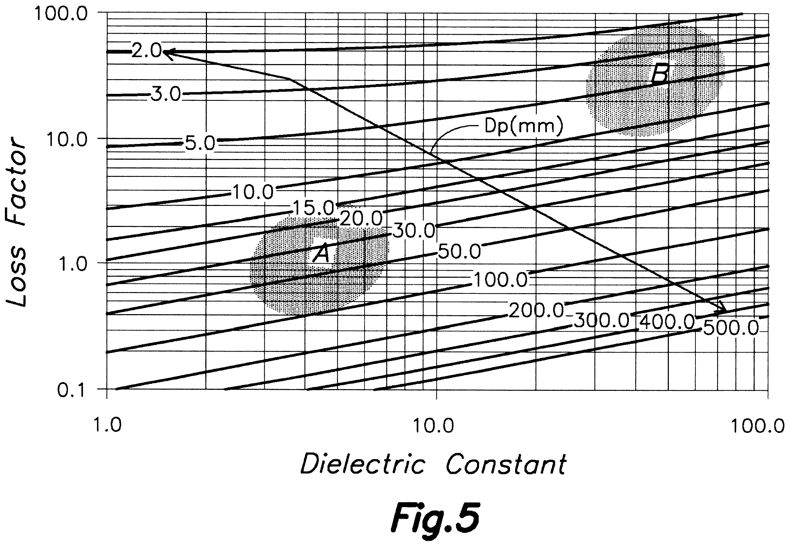

Changes in the dielectric properties of the components impacts in turn on the microwave electric field penetration depth, as shown in Fig. 5, which is a microwave electric field penetration depth Dp map showing the effect of the dielectric properties of food components on the degree of "transparency" of foods to microwaves.

Penetration depth Dp is defined as the distance travelled by the microwave before the amplitude of the microwave electric field |E| is reduced to 1/e of its value at the start point. In other words, as the wave travels through a food material the electric field in the product is approximately 1/3 of the initial level at 1 Dp, 1/9 at 2 Dp, 1/27 at 3 Dp, 1/81 at 4 Dp and so on. Add to the fact that the power dissipated at any point in the food is dependent on |E|² which means that local heating rates along the wave propagation path will be 1 at distance 0, 1/9 at 1 Dp, 1/81 at 2 Dp, 1/729 at 3 Dp, 1/6561 at 4 Dp. It is apparent from these illustrations that products which are more than 2+2 Dp in thickness will heat very unevenly over short times (i.e. a few minutes).

We can see from Fig. 5 that while the penetration depth of microwaves in the dough and the frozen filling is relatively long, it is very short in the filling at temperatures above the freezing point which causes the heating rates in the filling to be very uneven. The heating rate is very high on the outer part of the filling and decays very rapidly further into the filling. In Fig. 5, the shaded area A corresponds to fat and oils, frozen sauces, meats and vegetables, and baked dough, and the shaded area B corresponds to sauces, meats and vegetables above freezing temperatures.

The present invention provides a frozen dough-based vase-shaped snack heatable by microwave, comprising a cone- or cylinder-shaped outer layer made of dough having a closed lower portion and a rim upper portion around an open top, and a savoury or sweet filling located within said outer layer and having a top surface exposed at said open top of the outer layer. The filling comprises a hollow core having inner surfaces open at said top surface thereof. Said hollow core is sufficiently wide to allow for the microwaves to propagate through it and provide for the irradiation with microwaves of the filling from said inner surfaces of the hollow core.

Thus, the open hollow core in the filling causes an increase in the coupled microwave energy and the redistribution of the energy throughout the filling. The hollow core is configured such that the filling has a thickness equal or less than four times the penetration depth Dp of the microwave electric field |E|, wherein penetration depth Dp is defined as the distance travelled by the microwave before the amplitude of the microwave electric field |E| is reduced to 1/e of its value at the start point as mentioned above. The hollow core extends into the filling to a depth whereby the thickness of the filling in the closed lower portion of the outer layer does not exceed four times the penetration depth Dp.

In an embodiment the outer layer is substantially cone-shaped and the hollow core of the filling is substantially cone-shaped, in another embodiment the outer layer is substantially cone-shaped and the hollow core of the filling is substantially cylinder-shaped, and in still another embodiment the outer layer is substantially cylinder-shaped and the hollow core of the filling is substantially cylinder-shaped.

In any case, the frozen dough-based vase-shaped snack of the present invention is configured to be stored and/or commercialized in a frozen state, such that both the outer layer and the filling are in a frozen state at the beginning when they are re-heated by means of microwaves.

### Brief description of the drawings

The above and other features and advantages will be more fully understood from the following detailed description of exemplary embodiments with reference to the accompanying drawings, in which:
Fig. 1 is a perspective view of a frozen dough-based cone snack heatable by microwave according to an embodiment of the present invention;
Fig. 2 is a cross sectional view taken through a mid-vertical plane of the frozen dough-based cone snack of Fig. 1;
Fig. 3 is a cross sectional view of a frozen dough-based cone snack heatable by microwave according to another embodiment of the present invention;
Fig. 4 is a cross sectional view of a frozen dough-based cylinder snack heatable by microwave according to still another embodiment of the present invention; and
Fig. 5 is a graph showing the microwave electric field penetration depth Dp for different foods in different states.

### Detailed description of exemplary embodiments

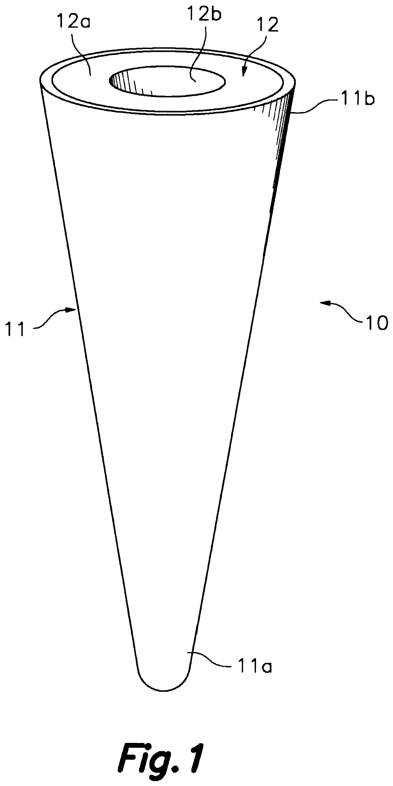

Fig. 1 shows a frozen dough-based vase-shaped snack heatable by microwave, comprising a cone-shaped outer layer 11 made of dough having a closed lower portion 11a and a rim upper portion 11b around an open top; and a savoury or sweet filling 12 located within said outer layer 11 and having a top surface 12a exposed at said open top of the outer layer 11. The outer layer 11 and the filling 12 are configured to be preserved in a frozen state so that they can be heated by means of microwaves at any time for consumption.

According to the proposal of this invention the filling 12 comprises a hollow core 12b that opens at the top surface 12a thereof, said hollow core 12b having inner surfaces. The hollow core 12b is sufficiently wide to allow for the microwaves to propagate through it and provide for the irradiation with microwaves of the filling 12 from inner surfaces of the hollow core 12b.

The key feature of the proposal lies in providing a maximum thickness of the ring of filling (between cone-shaped outer layer 11 and inner surface of the hollow core 12b) left after the hole is created, that must ideally be up two microwave penetration depths Dp.

Therefore the hollow core 12b is configured such that the ring of filling 12 it provides has a thickness T equal or less than four times the penetration depth Dp of the microwave electric field |E|, wherein penetration depth Dp is defined as the distance travelled by the microwave before the amplitude of the microwave electric field |E| is reduced to 1/e of its value at the start point.

Moreover the hollow core 12b extends into the filling 12 to a depth whereby the thickness T of the filling 12 at the level of the closed lower portion 11a of the outer layer 11 does not exceed four times the penetration depth Dp, wherein penetration depth Dp is defined as the distance travelled by the microwave before the amplitude of the microwave electric field |E| is reduced to 1/e of its value at the start point.

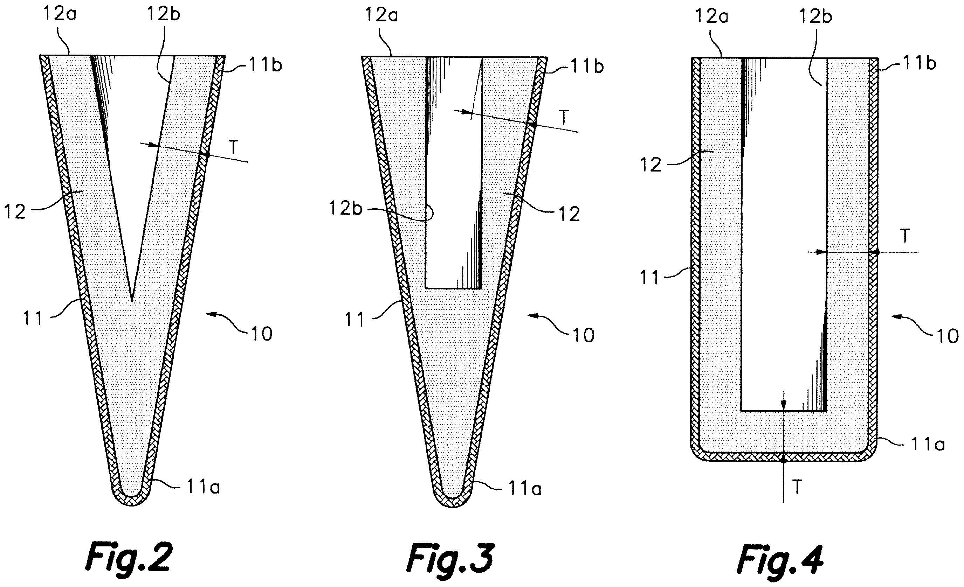

Fig. 2 shows a frozen dough-based cone-shaped snack in which the outer layer 11 is substantially cone-shaped and the hollow core 12b of the filling 12 is substantially cone-shaped.

An alternative embodiment of the invention is shown in Fig.3, where the frozen dough-based cone-shaped snack is as the one in Fig. 2 but the hollow core 12b of the filling 12 is substantially cylinder-shaped.

Fig. 4 shows another frozen dough-based cone-shaped snack in which the outer layer 11 is substantially cylinder-shaped and the hollow core 12b of the filling 12 is substantially cylinder-shaped.

The invention is then applicable to any frozen dough-based cone-shaped or cylinder-shaped snack, of elongated figure and containing different kinds of savoury or sweet filling that can be preserved in a frozen state.

## Claims

1. A frozen dough-based vase-shaped snack heatable by microwave, comprising:
a cone or cylindrical-shaped dough-based outer layer (11) made of dough having a closed lower portion (11a) and a rim upper portion (11b) around an open top; and
a savoury or sweet filling (12) located within said outer layer (11) and having a top surface (12a) exposed at said open top of the outer layer (11);
wherein both the outer layer (11) and the filling (12) are in a frozen state, at the time they are re-heated by means of microwaves **characterized in that**:
the filling (12) comprises an open hollow core (12b) having inner surfaces open at said top surface (12a) of the filling (12), said hollow core (12b) allowing for the microwaves to propagate through the hollow core (12b) and irradiate the filling (12) from said inner surfaces of the hollow core (12b);
wherein the hollow core (12b) is configured such that a ring of filling (12) is provided between the outer layer (11) and the hollow core (12b);
wherein said ring of filling has a thickness (T) equal or less than four times the penetration depth (Dp) of the microwave electric field |E|; and
wherein the hollow core (12b) extends into the filling (12) to a depth whereby a thickness (T) of the filling (12) in the closed lower portion (11a) of the outer layer (11) does not exceed four times the penetration depth (Dp),
wherein the penetration depth (DP) being defined as the distance travelled by the microwave before the amplitude of the microwave electric field |E| is reduced to 1/e of its value at the start point.

2. The frozen dough-based vase-shaped snack according to claim 1, wherein the outer layer (11) is cone-shaped and the hollow core (12b) of the filling (12) is cone-shaped.

3. The frozen dough-based vase-shaped snack according to claim 1, wherein the outer layer (11) is cone-shaped and the hollow core (12b) of the filling (12) is cylinder-shaped.

4. The frozen dough-based vase-shaped snack according to claim 1, wherein the outer layer (11) is cylinder-shaped and the hollow core (12b) of the filling (12) is cylinder-shaped.

## Patentansprüche

1. Gefrorener teigbasierter, in der Mikrowelle erwärmbarer Imbiss in Vasenform, umfassend:
eine kegelförmige oder zylindrische teigbasierte äußere Schicht (11), hergestellt aus Teig mit einem geschlossenen unteren Teil (11a) und einem oberen Randteil (11b) um einen offenen oberen Ende herum; und
eine salzige oder süße Füllung (12), welche sich innerhalb der genannten äußeren Schicht (11) befindet und eine obere Fläche (12a) aufweist, welche am genannten offenen oberen Ende der äußeren Schicht (11) freiliegt;
wobei sowohl die äußere Schicht (11) als auch die Füllung (12) in einem gefrorenen Zustand sind, zum Zeitpunkt in welchem sie mittels Mikrowellen wiedererwärmt werden, **dadurch gekennzeichnet, dass**:
die Füllung (12) einen offenen hohlen Kern (12b) umfasst, welcher innere Flächen aufweist, die an der genannten oberen Fläche (12a) der Füllung (12) offen sind, wobei der genannte hohle Kern (12b) erlaubt, dass sich die Mikrowellen durch den hohlen Kern (12b) ausbreiten und die Füllung (12) von den genannten inneren Flächen des hohlen Kerns (12b) bestrahlen;
wobei der hohle Kern (12b) derart ausgebildet ist, dass ein Ring von Füllung (12) zwischen der äußeren Schicht (11) und dem hohlen Kern (12b) bereitgestellt wird;
wobei der genannte Ring von Füllung eine Dicke (T) aufweist, welche gleich oder weniger als viermal die Eindringtiefe (Dp) des elektrischen Mikrowellenfeldes |E| ist; und
wobei sich der hohle Kern (12b) in die Füllung (12) bis zu einer Tiefe erstreckt, wodurch eine Dicke (T) der Füllung (12) im geschlossenen unteren Teil (11a) der äußeren Schicht (11) nicht viermal die Eindringtiefe (Dp) überschreitet,
wobei die Eindringtiefe (DP) als der Abstand definiert wird, welcher die Mikrowelle geht, bevor die Amplitude des elektrischen Mikrowellenfeldes |E| bis 1/e dessen Wertes am Anfangspunkt verringert wird.

2. Gefrorener teigbasierter Imbiss in Vasenform nach Anspruch 1, wobei die äußere Schicht (11) kegelförmig ist und der hohle Kern (12b) der Füllung (12) kegelförmig ist.

3. Gefrorener teigbasierter Imbiss in Vasenform nach Anspruch 1, wobei die äußere Schicht (11) kegelförmig ist und der hohle Kern (12b) der Füllung (12) zylindrisch ist.

4. Gefrorener teigbasierter Imbiss in Vasenform nach Anspruch 1, wobei die äußere Schicht (11) zylindrisch ist und der hohle Kern (12b) der Füllung (12) zylindrisch ist.

## Revendications

1. Un en-cas en forme de vase en pâte surgelée pouvant être chauffé par microondes comportant :
une couche extérieure (11) à base de pâte ayant une forme conique ou cylindrique faite en pâte ayant une portion inférieure (11a) fermée et une portion supérieure de bord (11b) autour d'une partie supérieure ouverte ; et
une garniture salée ou sucrée (12) située à l'intérieur de cette couche extérieure (11) et ayant une surface supérieure (12a) exposée à cette partie supérieure ouverte de la couche extérieure (11) ;
où aussi bien la couche extérieure (11) que la garniture (12) sont à l'état surgelé, au moment où elles sont réchauffées par microondes, **caractérisé en ce que** :
la garniture (12) comporte un noyau creux ouvert (12b) ayant des surfaces intérieures ouvertes dans cette surface supérieure (12a) de la garniture (12), ce noyau creux (12b) permettant aux microondes de se propager à travers le noyau creux (12b) et irradier la garniture (12) depuis ces surfaces intérieures du noyau creux (12b) ;
où le noyau creux (12b) est configuré de sorte qu'un rond de garniture (12) est prévu entre la couche extérieure (11) et le noyau creux (12b) ;
où ce rond de garniture possède une épaisseur (T) égale ou inférieure à quatre fois la profondeur de pénétration (Dp) du champ électrique de microondes |E| ; et
où le noyau creux (12b) s'étend dans la garniture (12) jusqu'à une profondeur à laquelle une épaisseur (T) de la garniture (12) de la portion inférieure fermée (11a) de la couche extérieure (11) ne dépasse pas quatre fois la profondeur de pénétration (Dp).
où la profondeur de pénétration (DP) étant définie comme la distance parcourue par les microondes avant que l'amplitude du champ électrique des microondes IEI ne soit réduite à 1/e de sa valeur au point de départ.

2. L'en-cas en forme de vase en pâte surgelée conformément à la revendication 1, où la couche extérieure (11) est conique et le noyau creux (12b) de la garniture (12) est conique.

3. L'en-cas en forme de vase en pâte surgelée conformément à la revendication 1, où la couche extérieure (11) est conique et la noyau creux (12b) de la garniture (12) est cylindrique.

4. L'en-cas en forme de vase en pâte surgelée conformément à la revendication 1, où la couche extérieure (11) est cylindrique et la noyau creux (12b) de la garniture (12) est cylindrique.
